**Europäisches Patentamt**

**European Patent Office**

**Office européen des brevets**

(11) Veröffentlichungsnummer: **0 223 929**
**B1**

# EUROPÄISCHE PATENTSCHRIFT

(45) Veröffentlichungstag der Patentschrift:
**19.09.90**

(21) Anmeldenummer: **86111576.4**

(22) Anmeldetag: **21.08.86**

(51) Int. Cl.⁵: **B65H 75/34**, F16G 13/16,
F16L 3/00

(54) Energieleitungsträger.

(30) Priorität: **25.10.85 DE 3537961**

(43) Veröffentlichungstag der Anmeldung:
**03.06.87 Patentblatt 87/23**

(45) Bekanntmachung des Hinweises auf die Patenterteilung:
**19.09.90 Patentblatt 90/38**

(84) Benannte Vertragsstaaten:
**AT CH DE FR GB IT LI SE**

(56) Entgegenhaltungen:
**EP-A- 0 038 953**
**DE-A- 2 622 006**
**GB-A- 1 121 178**

(73) Patentinhaber: **Kabelschlepp Gesellschaft mit beschränkter Haftung, Marienborner Strasse 75, D-5900 Siegen 1(DE)**

(72) Erfinder: **Moritz, Werner, Wetzlarer Strasse 112, D-5900 Siegen(DE)**

(74) Vertreter: **Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11(DE)**

## Beschreibung

Gegenstand der Erfindung ist ein Energieleitungsträger in Schlauchform für die Anordnung zwischen einem ortsfesten Anschluß und einem beweglichen Verbraucher mit einer Vielzahl ineinandergreifender und gegeneinander abwinkelbarer Gelenkteile und Bügelteile, wobei die innenliegenden Gelenkteile mit nach außen gerichteten Anschlägen und die außenliegenden, benachbarte Gelenkteile miteinander verbindende Bügelteile mit nach innen gerichteten Anschlägen sich hintergreifen und wobei die Gelenkteile und die Bügelteile an einer Ober- bzw. Unterseite des Schlauches eine Öffnung freilassen, in die ein flexibles Abdeckband eingezogen ist, welches die Öffnung freitragend überspannt.

Aus der DE-C 3 040 076 ist ein Energieleitungsträger dieser Art bekannt, der dazu bestimmt ist, zwischen einem ortsfesten Anschluß und einem beweglichen Verbraucher, beispielsweise dem Support einer Werkzeugmaschine, eingesetzt zu werden, um Energieleitungen, beispielsweise Kabel und Schläuche für Elektrizität, Druckluft und/oder Kühlmittel schonend und zugentlastet zu führen. Dabei muß der Energieleitungsträger selbsttragend sein, damit er nicht durchhängt und die Energieleitungen geknickt werden. Darüber hinaus darf der Energieleitungsträger nur um einen bestimmten Radius gekrümmt werden können, welcher dem zulässigen Biegeradius der empfindlichsten Energieleitung entspricht. Diese Bedingungen für eine selbsttragende Konstruktion werden bei dem bekannten Energieleitungsträger mit einer Vielzahl von ineinandergreifenden und gegeneinander abwinkelbarer Gelenkteile und Bügelteile erfüllt. Die innenliegenden Gelenkteile sind mit nach außen gerichteten Anschlägen versehen, während die außenliegenden Bügelteile, die benachbarte Gelenkteile miteinander verbinden, mit nach innen gerichteten Anschlägen versehen sind, wobei sich die Anschläge der Gelenkteile und Bügelteile hintergreifen.

Bei dem bekannten Energieleitungsträger ist von Nachteil, daß mit einer vorgegebenen Größe der Gelenk- und Bügelteile nur ein bestimmter Schlauchquerschnitt des Energieleitungsträgers hergestellt werden kann. Soll beispielsweise zur Hinzufügung einer weiteren Energieleitung der Energieleitungsträger verbreitert werden, müssen entsprechend breitere Gelenk- und Bügelteile bereitgestellt und zusammengebaut werden, was mit hohen Werkzeugkosten verbunden ist.

Aus der GB-A 1 121 178 ist eine Energieführungskette bekannt, die aus einer Vielzahl von identischen Kettengliedern besteht, die die Seitenteile der Energieführungskette bilden und die in einer Richtung gegeneinander abwinkelbar sind. Die Kettenglieder bestehen jeweils aus zwei zueinander parallelen Platten, die einen Abstand entsprechend der Breite der Energieführungskette aufweisen. Die benachbarten Platten aufeinanderfolgender Kettenglieder sind durch Scharniere miteinander verbunden, wobei diese Scharniere durch Bolzen gebildet werden. Zu diesem Zweck sind die Platten beidseitig jeweils mit einer eine Öffnung aufweisenden Lasche versehen, wobei die Laschen einander benachbarter Platten übereinanderliegen und durch die Öffnungen jeweils ein Bolzen zur Bildung des Scharniers durchgeführt ist. Um den Verschwenkwinkel der aufeinanderfolgenden Kettenglieder zu begrenzen, stoßen die Seitenkanten der einander benachbarten Platten dieser Kettenglieder aneinander. Die an der Oberseite und an der Unterseite freigelassenen Öffnungen der Kettenglieder sind mit biegsamen Abdeckungen versehen, die sich in Längsrichtung entlang der Energieführungskette erstrecken und seitlich zwischen den einander gegenüberliegenden Platten durch Stegteile sowie Rollen gehalten sind.

Bei dieser bekannten Energieführungskette ist von Nachteil, daß sie aus vielen Einzelteilen besteht. So müssen zum Verbinden zweier Kettenglieder Bolzen mittels Unterlegscheiben und Muttern angebracht werden. Auch die Anbringung der flexiblen Abdeckbänder ist durch die Verwendung von Stegteilen und Rollen kompliziert, so daß insgesamt die Verbreiterung der Energieführungskette nur mit einem erheblichen technischen Aufwand möglich ist.

Aus der nach Artikel 54 (3, 4) EPÜ zu berücksichtigenden EP-A 0 192 852 ist ein Energieleitungsträger bekannt, bei dem an einer Oberseite bzw. Unterseite des Schlauches die Gelenk- und Bügelteile eine Öffnung freilassen, so daß ein flexibles Abdeckband eingezogen werden kann, welches die Öffnung freitragend überspannt. Allerdings dient dieses flexible Abdeckband nur zum schnellen Auswechseln oder zum Austausch der Energieleitungen, ohne daß es dazu einer vollständigen Demontage des Energieleitungsträgers bedarf.

Davon ausgehend liegt der Erfindung die **Aufgabe** zugrunde, einen Energieleitungsträger zu schaffen, bei dem mit geringen Werkzeugkosten eine Vielzahl von Schlauchquerschnitten hergestellt werden können.

Als technische **Lösung** wird bei einem Energieleitungsträger der eingangs beschriebenen Gattung vorgeschlagen, daß die Gelenkteile als Gelenkteil-Paare für die beiden Seitenwände des Schlauches ausgebildet sind, daß zwischen den bieden Gelenkteilen jedes Gelenkteil-Paares eine Traverse fest angebracht ist, daß benachbarte Gelenkteil-Paare über Bügelteil-Paare gegeneinander abwinkelbar miteinander verbunden sind und daß zwischen den entsprechenden, einander gegenüberliegenden Enden der Gelenkteil-Paare ein flexibles Abdeckband-Paar eingezogen ist, welches die beiden Öffnungen der Gelenkteile und Bügelteile freitragend überspannt.

Ein nach dieser technischen Lehre ausgebildeter Energieleitungsträger hat den **Vorteil**, daß mit geringen Werkzeugkosten eine Vielzahl unterschiedliche Schlauchquerschnitte, insbesondere Schlauchbreiten, des Energieleitungsträgers hergestellt werden können. Um die Breite des Energieleitungsträgers zu vergrößern oder zu verkleinern müssen lediglich entsprechend lange oder kurze Traversen zwischen den beiden Gelenkteilen jedes Gelenkteil-Paares angebracht werden. Die Gelenk- und Bügelteile bleiben dabei in ihren Größen unverändert. Zusätzlich zu den unterschiedlich langen Traversen müssen lediglich unterschiedliche Breiten der einzuziehenden flexiblen Abdeckbänder bereitgestellt werden. Soll zusätzlich noch die Höhe des Schlauches des Energieleitungsträgers verändert werden, müssen lediglich unterschiedlich hohe Gelenk- und Bügelteile bereitgestellt werden. Durch wenige unterschiedliche Größen sowohl der Gelenk- und Bügelteile als auch der Traversen können eine Vielzahl von Schlauchquerschnitten realisiert werden, so daß praktisch mit dem Baukastensystem jede vorgegebene Energieleitungsanordnung mit einem dazu passenden Energieleitungsträger versehen werden kann.

Bei einer praktischen Ausführungsform können die Innenseiten der Gelenkteile Vertiefungen zur Aufnahme der Traversen aufweisen und die Traversen sind über von außen durch die Gelenkteile hindurch eindrehbare Schrauben fest mit den Gelenkteilen verbunden. Auf diese Weise lassen sich die Traversen einfach an den Gelenkteilen befestigen, wobei durch die Vertiefungen und durch die Schraubverbindungen ein sicherer Halt und damit eine große Stabilität gewährleistet ist.

Vorzugsweise sind die Traversen im Bereich eines der Abdeckbänder zwischen den Gelenkteilen angebracht. Dies hat den Vorteil, daß die Traversen den Verlauf der Energieleitungen nicht wesentlich stören.

Alternativ dazu wird vorgeschlagen, daß die Traversen in der Mitte zwischen den Gelenkteilen angebracht sind. In dieser Ausgestaltung dienen die Traversen als Trennstege, wenn in den Energieleitungsträger zwei übereinanderliegende Lage verlegt werden sollen.

In einer weiteren Ausgestaltung wird vorgeschlagen, daß mehrere Traversen zwischen den entsprechenden Gelenkteilen der Gelenkteil-Paare angebracht sind . Durch mehrere Traversen ist die Stabilität des Energieleitungsträgers noch weiter verbessert, was insbesondere dann wichtig ist, wenn der Energieleitungsträger eine Vielzahl von Energieleitungen aufnehmen soll.

Auf die Traversen können vorzugsweise Trennstege aufgesteckt sein, so daß eine geordnete Verlegung der Energieleitungen innerhalb des Energieleitungsträgers möglich ist.

In einer bevorzugten Ausführungsform sind die freien Enden der Bügelteile U-förmig nach innen umgebogen und hintergreifen die Enden der Gelenkteile. Auf diese Weise ist eine sichere Verbindung zwischen benachbarten Gelenkteil-Paaren gewährleistet.

In einer weiteren Ausgestaltung wird vorgeschlagen, daß die Enden der Gelenkteile an deren Innenseiten Führungsschlitze zum Einschieben der Abdeckbänder aufweisen. Durch die Führungsschlitze an den Enden der Gelenkteile können die Abdeckbänder auf einfache Weise eingezogen werden, wobei darüber hinaus ein sicherer Halt der Abdeckbänder zwischen den Gelenkteilen gewährleistet ist.

Schließlich wird mit der Erfindung vorgeschlagen, daß die Abdeckbänder Verstärkungssicken aufweisen. Dadurch wird die Stabilität des Schlauches des Energieleitungsträgers verbessert.

Weitere Einzelheiten und Vorteile ergeben sich aus der nachfolgenden Beschreibung eines in der Zeichnung dargestellten Ausführungsbeispieles eines Energieleitungsträgers. In der Zeichnung zeigt:

Fig. 1 einen Energieleitungsträger in perspektivischer Darstellung;

Fig. 2 eine vergrößerte Seitendarstellung von außen des Energieleitungsträgers, wobei zwei benachbarte Gelenkteile über ein mittleres Bügelteil miteinander verbunden sind;

Fig. 3 eine zu Fig. 2 entsprechende Darstellung, jedoch von innen;

Fig. 4 eine zu Fig. 2 bzw. Fig. 3 senkrechte Darstellung des Energieleitungsträgers in dessen Längsrichtung, wobei die entsprechende rechte Hälfte weggelassen ist.

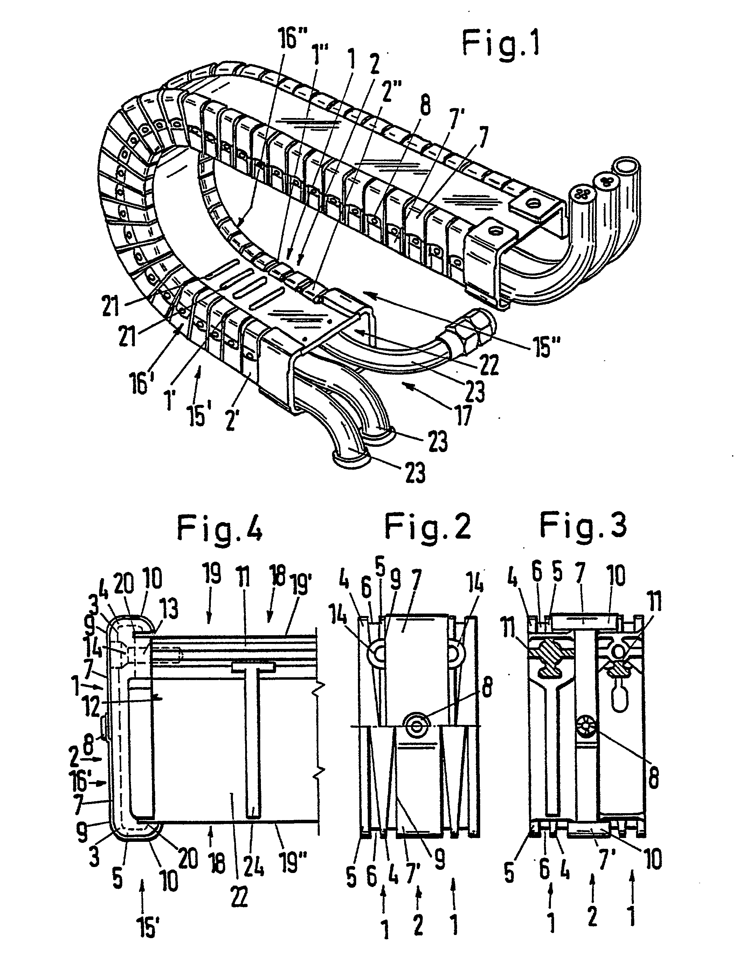

Der dargestellte Energieleitungsträger besteht aus einer wechselnden Folge von Gelenkteilen 1 und Bügelteilen 2, die formschlüssig zusammengesteckt sind und aus der gestreckten Lage nur zu einer Seite hin gegeneinander verschwenkt werden können, während sie in der gestreckten Lage zu den anderen drei Seiten hin einen starren Strang bilden. Dies ist in Fig. 1 dargestellt, bei dem der obere Bereich des Energieleitungsträgers nicht durchhängt, während er in der anderen Richtung gebogen werden kann.

Die Gelenkteile 1 sind als Gelenkteil-Paare 1', 1" und die Bügelteile 2 als Bügelteil-Paare 2', 2" ausgebildet. Die einzelnen Gelenkteile 1',1" sind an ihren oberen und unteren Enden 3 mit nach außen gerichteten Anschlägen 4,5 versehen, die zwischen sich Rinnen 6 bilden. Dabei sind die Anschläge 4 schräg und die Anschläge 5 gerade ausgebildet. Jedes der Bügelteile 2',2" setzt sich aus zwei Schenkeln 7,7' zusammen, die mit einem Spreizniet 8 zusammengehalten werden. Die Bügel teile 2', 2" sind mit nach innen gerichteten Anschlägen 9 versehen, die die Anschläge 4,5 der Gelenkteile 1',1" in den Rinnen 6 hintergreifen. Die freien Enden 10 der Schenkel 7, 7' der Bügelteile 2',2" sind U-förmig nach innen umgebogen und hintergreifen die Enden 3 der Gelenkteile 1',1".

Da die Anschläge 4 schräg und die Anschläge 5 gerade sind, lassen sich benachbarte Gelenkteile 1',1" nur in einer Richtung abwinkeln, während in der anderen Richtung der Anschlag 9 des Bügelteils 2',2" an dem geraden Anschlag 5 des Gelenkteils 1',1" in der gestreckten Lage des Energieleitungsträgers anliegt und ein Abwinkeln verhindert.

Die einander zugeordneten Gelenkteile 1',1" jedes Gelenkteil-Paares sind über eine Traverse 11 miteinander verbunden, wobei dei Gelenkteile 1',1" parallel zueinander ausgerichtet sind und zusammen mit der Traverse 11 ein U-Profil bilden. Zum Befestigen der Traversen 11 an den Gelenkteilen 1',1" weisen diese an ihren Innenseiten 12 Vertiefungen 13 auf, in die die Traversen 11 hineingestreckt werden. Zur Sicherung der Traversen 11 in den Vertiefungen 13 dienen Schrauben 14, die von außen durch die Gelenkteile 1',1" hindurch in die Traversen 11 eingeschraubt werden. Dies ist insbesondere in den Fig. 2 und 4 dargestellt.

Die einander benachbarten und mittels der Bügelteile 2',2" miteinander verbundenen Gelenkteile 1',1" bilden Gelenkbänder 15',15" als Seitenwände 16',16" eines Schlauches 17. Um die oberen und unteren Öffnungen 18 des Schlauches 17 zu verschließen, sind Abdeckbänder 19 in Form von Abdeckband-Paaren 19',19" eingezogen, welche die Öffnungen 18 freitragend überspannen. Zu diesem Zweck weisen die Enden 3 der Gelenkteile 1',1" Führungsschlitze 20 auf, in die die Abdeckbänder 19 eingezogen werden. Zur Verstärkung des Energieleitungsträgers können die Abdeckbänder mit quer verlaufenden Verstärkungssicken 21 versehen sein.

Die seitlichen Gelenkteile 1',1" bilden zusammen mit den oberen und unteren Abdeckbändern 19 einen Innenraum 22 des Energieleitungsträgers, durch den hindurch Energieleitungen 23 verlegt werden können. Für die geordnete Verlegung der Energieleitungen 23 können auf die Traversen 11 Trennstege 24 aufgesteckt werden.

Die seitlichen Gelenkteile 1',1" bilden zusammen mit den Traversen 11 und den oberen unteren Abdeckbändern 19 einen Baukasten, mit dem unterschiedliche Schlauchquerschnitte hergestellt werden können. Durch unterschiedlich lange Traversen 11 können unterschiedliche Breiten des Schlauches 17 hergestellt werden entsprechend der Anzahl der zu verlegenden Energieleitungen 23. Durch unterschiedlich hohe Gelenkteile 1',1" und entsprechend hohe Bügelteile 2',2" können unterschiedliche Höhen geschaffen werden, entsprechend der Dicke der zu verlegenden Energieleitungen 23. Mit dieser technischen Lehre ist es somit möglich, mit wenigen Gelenkteilen 1',1" mit unterschiedlichen Größen (und dazu passenden Bügelteilen 2',2") und mit wenigen Traversen 11 mit unterschiedlichen Längen (mit dazu entsprechend breiten Abdeckbändern 19) eine Vielzahl von Schlauchquerschnitten für die Energieleitungsträger zu schaffen, so daß nur wenige Werkzeugkosten anfallen. Mit einem vorgegebenen Baukasten lassen sich so gut wie alle Energieleitungsanordnungen in einem Energieleitungsträger verlegen.

### Bezugszeichenliste

1 Gelenkteil
1',1" Gelenkteil-Paar
2 Bügelteil
2',2" Bügelteil-Paar
3 Ende
4 Anschlag
5 Anschlag
6 Rinne
7,7' Schenkel
8 Spreizniet
9 Anschlag
10 Ende
11 Traverse
12 Innenseite
13 Vertiefung
14 Schraube
15',15" Gelenkband
16',16" Seitenwand
17 Schlauch
18 Öffnung
19 Abdeckband
19',19" Abdeckband-Paar
20 Führungsschlitz
21 Verstärkungssicke
22 Innenraum
23 Energieleitung
24 Trennsteg

### Patentansprüche

1. Energieleitungsträger in Schlauchform für die Anordnung zwischen einem ortsfesten Anschluß und einem beweglichen Verbraucher mit einer Vielzahl ineinandergreifender und gegeneinander abwinkelbarer Gelenkteile (1; 1', 1") und Bügelteile (2; 2', 2"), wobei die innenliegenden Gelenkteile (1; 1', 1") mit nach außen gerichteten Anschlägen (4, 5) und die außenliegenden, benachbarte Gelenkteile (1; 1', 1") miteinander verbindende Bügelteile (2; 2', 2") mit nach innen gerichteten Anschlägen (9) sich hintergreifen und wobei die Gelenkteile (1' 1', 1") und die Bügelteile (2; 2', 2") an einer Ober- bzw. Unterseite des Schlauches (17) eine Öffnung (18) freilassen, in die ein flexibles Abdeckband (19; 19', 19") eingezogen ist, welches die Öffnung (18) freitragend überspannt, **dadurch gekennzeichnet,** daß die Gelenkteile (1) als Gelenkteil-Paare (1', 1") für die beiden Seitenwände (16', 16") des Schlauches (17) ausgebildet sind, daß zwischen den beiden Gelenkteilen (1', 1") jedes Gelenkteil-Paares eine Traverse (11) fest angebracht ist, daß benachbarte Gelenkteil-Paare (1', 1") über Bügelteil-Paare (2', 2") gegeneinander abwinkelbar miteinander verbunden sind und daß zwischen den entsprechenden, einander gegenüberliegenden Enden (3) der Gelenkteil-Paare (1', 1") ein flexibles Abdeckband-Paar (19', 19") eingezogen ist, welches die beiden Öffnungen (18) der Gelenkteile (1) und Bügelteile (2) freitragend überspannt.

2. Energieleitungsträger nach Anspruch 1, dadurch gekennzeichnet, daß die Innenseiten (12) der Gelenkteile (1', 1") Vertiefungen (13) zur Aufnahme der Traversen (11) aufweisen und daß die Traversen (11) über von außen durch die Gelenkteile (1', 1") hindurch eindrehbare Schrauben (14) fest mit den Gelenkteilen (1', 1") verbunden sind.

3. Energieleitungsträger nach Anspruch 1 oder 2, dadurch gekennzeichnet, daß die Traversen (11) im Bereich eines der Abdeckbänder (19', 19") zwischen den Gelenkteilen (1', 1") angebracht sind.

4. Energieleitungsträger nach Anspruch 1 oder 2, dadurch gekennzeichnet, daß die Traversen (11) in der Mitte zwischen den Gelenkteilen (1', 1") angebracht sind.

5. Energieleitungsträger nach einem der Ansprüche 1 bis 4, dadurch gekennzeichnet, daß mehrere Traversen (11) zwischen den entsprechenden Gelenkteilen (1', 1") der Gelenkteil-Paare angebracht sind.

6. Energieleitungsträger nach einem der Ansprüche 1 bis 5, dadurch gekennzeichnet, daß auf die Traversen (11) Trennstege (24) aufgesteckt sind.

7. Energieleitungsträger nach einem der Ansprüche 1 bis 6, dadurch gekennzeichnet, daß die freien Enden (10) der Bügelteile (2', 2") U-förmig nach innen umgebogen sind und die Enden (3) der Gelenkteile (1', 1") hintergreifen.

8. Energieleitungsträger nach einem der Ansprüche 1 bis 7, dadurch gekennzeichnet, daß die Enden (3) der Gelenkteile (1', 1") an deren Innenseiten (12) Führungsschlitze (20) zum Einschieben der Abdeckbänder (19',19") aufweisen.

9. Energieleitungsträger nach einem der Ansprüche 1 bis 8, dadurch gekennzeichnet, daß die Abdeckbänder (19', 19") Verstärkungssicken (21) aufweisen.

**Claims**

1. An energy support in flexible hose form adapted to be arranged between a fixed connection and a moving load and having a large number of articulated members (1; 1', 1") and stirrup members (2; 2', 2") which engage one another and which are bendable relatively to one another, the articulated members (1; 1', 1") on the inside and the stirrup members (2; 2', 2") on the outside which interconnect adjacent articulated members (1; 1', 1") engaging one another by way of outwardly directed abutments (4, 5) and inwardly directed abutments (9) respectively, the articulated members (1; 1', 1") and the stirrup members (2; 2', 2") leaving clear on a top or bottom of the hose (17) an opening (18) into which a flexible cover strip (19; 19', 19") is drawn, such strip spanning the opening (18) in self-supporting manner, characterised in that
the articulated members (1) are in the form of pairs of articulated members (1', 1") for the two side walls (16', 16") of the hose (17);
a cross-member (11) is fixedly disposed between the two articulated members (1', 1") of each pair of such members;
adjacent articulated member pairs (1', 1") are so interconnected by way of stirrup member pairs (2', 2") as to be bendable relatively to one another, and
a flexible cover strip pair (19', 19") is drawn in between the corresponding facing ends (3) of the articulated member pairs (1', 1") and spans in self-supporting manner the two openings (18) of the articulated members (1) and stirrup members (2).

2. A support according to claim 1, characterised in that the insides (12) of the articulated members (1', 1") are formed with recesses (13) to receive the cross-members (11) and the same are rigidly connected to the articulated members (1', 1") by way of screws (14) adapted to be turned in from the outside through the articulated members (1', 1").

3. A support according to claim 1 or 2, characterised in that the cross-members (11) are disposed near one of the cover strips (19', 19") between the articulated members (1', 1").

4. A support according to claim 1 or 2, characterised in that the cross-members (11) are disposed centrally between the articulated members (1', 1").

5. A support according to any of claims 1–4, characterised in that a number of cross-members (11) are disposed between the corresponding articulated members (1', 1") of the pairs thereof.

6. A support according to any of claims 1–5, characterised in that partitions (24) are pushed on to the cross-members (11).

7. A support according to any of claims 1–6, characterised in that the free ends (10) of the stirrup members (2', 2") are bent round inwardly in the shape of a U and engage behind the ends (3) of the articulated members (1', 1").

8. A support according to any of claims 1–7, characterised in that the ends (3) of the articulated members (1', 1") are formed on their insides (12) with guide slots (20) for the insertion of the cover strips (19', 19").

9. A support according to any of claims 1–8, characterised in that the cover strip (19', 19") are formed with strengthening seams or corrugations or the like (21).

**Revendications**

1. Support de conduites énergétiques, se présentant sous la forme d'un canal flexible, destiné à être agencé entre un point de raccordement fixe et un point d'utilisation mobile, et comportant une pluralité de pièces d'articulation (1; 1', 1") et d'étriers (2; 2', 2") s'emboîtant mutuellement et pouvant se couder les uns par rapport aux autres, les pièces d'articulation (1; 1', 1") situées intérieurement et comportant des butées (4, 5) dirigées vers l'extérieur, et les étriers (2; 2', 2") situés extérieurement, reliant entre-elles les pièces d'articulation voisines (1; 1', 1"), et comportant des butées (9) dirigées vers l'intérieur, se chevauchant mutuellement, et ces pièces d'articulation (1; 1', 1") et les étriers (2; 2', 2") laissant libre, sur un côté supérieur et inférieur du canal flexible (17), une ouverture (18), dans laquelle est insérée une bande de recouvrement flexible (19; 19', 19") qui sous-tend librement l'ouverture (18), caractérisé en ce que les pièces d'articulation (1) sont réalisées sous la forme de paires de pièces d'articulation (1', 1") pour les deux faces latérales du canal flexible (17), en ce qu'une traverse (11) est agencée de manière rigide entre les deux pièces d'articulation (1', 1") de chaque paire de pièces d'articulation, en ce que les paires de pièces d'articulation (1', 1") voisines sont reliées entre-elles par l'intermédiaire de paires d'étriers (2', 2") en pouvant être coudées entre-elles, et en ce que, entre les extrémités correspondantes opposées (3) des paires de pièces d'articulation (1', 1"), est insérée une paire de bandes de recouvrement (19', 19") qui sous-tendent librement les deux ouvertures (18) des pièces d'articulation (1) et des étriers (2).

2. Support de conduites énergétiques selon la revendication 1, caractérisé en ce que les côtés intérieurs (12) des pièces d'articulation (1', 1") comportent des évidements (13) destinés à recevoir les traverses (11), et en ce que les traverses (11) sont reliées de manière rigide aux pièces d'articulation (1', 1"), au moyen de vis (14) pouvant être engagées par l'extérieur, au travers des pièces d'articulation (1', 1").

3. Support de conduites énergétiques selon la revendication 1 ou 2, caractérisé en ce que les traverses (11) sont agencées dans la zone d'une des bandes de recouvrement (19', 19"), entre les pièces d'articulation (1', 1").

4. Support de conduites énergétiques selon la revendication 1 ou 2, caractérisé en ce que les traverses (11) sont agencées au centre entre les pièces d'articulation (1', 1").

5. Support de conduites énergétiques selon l'une des revendications 1 à 4, caractérisé en ce que plusieurs traverses (11) sont agencées entre les pièces d'articulation correspondantes (1', 1") des paires de pièces d'articulation.

6. Support de conduites énergétiques selon l'une des revendications 1 à 5, caractérisé en ce que des nervures de séparation (24) sont rapportées sur les traverses (11).

7. Support de conduites énergétiques selon l'une des revendications 1 à 6, caractérisé en ce que les extrémités libres (10) des étriers (2', 2") sont repliées vers l'intérieur selon une configuration en "U", en s'engageant derrière les extrémités (3) des pièces d'articulation (1', 1").

8. Support de conduites énergétiques selon l'une des revendications 1 à 7, caractérisé en ce que les extrémités (3) des pièces d'articulation (1', 1") présentent sur leur côté intérieur (12), des fentes de guidage (20) dans lesquelles sont insérées les bandes de recouvrement (19', 19").

9. Support de conduites énergétiques selon l'une des revendications 1 à 8, caractérisé en ce que les bandes de recouvrement (19', 19") comportent des empreintes de renforcement (21).

Fig.1

Fig.4    Fig.2    Fig.3